# EUROPEAN PATENT APPLICATION

(11) **EP 4 369 185 A1**
(43) Date of publication of application: **15.05.2024**
(21) Application number: 22866692.1
(22) Date of filing: 08.09.2022
(51) Int. Cl.: G06F 9/448

(54) **EXECUTION INSTRUCTION DETERMINATION METHOD AND APPARATUS, DEVICE, AND STORAGE MEDIUM**

(30) Priority: 10.09.2021 CN 202111060589
(71) Applicant: China Faw Co., Ltd., Changchun, Jilin 130011 (CN)
(72) Inventor: ZHENG, Hongli, Changchun, Jilin 130011 (CN); WU, Mingzhe, Changchun, Jilin 130011 (CN); LIU, Zhaoyang, Changchun, Jilin 130011 (CN); CAI, Xu, Changchun, Jilin 130011 (CN); FAN, Yongyou, Changchun, Jilin 130011 (CN)
(74) Representative: Grassi, Stefano
(86) International application number: PCT/CN2022/117769
(87) International publication number: WO 2023/036230

(57) **Abstract**

Disclosed in the present disclosure are an execution instruction determination method and apparatus, and a device and a storage medium. The method includes: acquiring input information, where the input information includes at least one first execution instruction and at least one piece of modal information; determining at least one second execution instruction based on the at least one piece of modal information; and determining a target execution instruction based on the at least one first execution instruction and the at least one second execution instruction.

## Description

### Cross-Reference to Related Application

This application claims priority to Chinese Patent Application No. 202111060589.0 filed to the China National Intellectual Property Administration on September 10, 2021, the entire contents of which are herein incorporated by reference.

### Technical Field

Embodiments of the present disclosure relate to the technical field of vehicles, and for example, to an execution instruction determination method and apparatus, and a device and a storage medium.

### Background

Generally, modality is the way that things happen or exist; and multi-modality is the combination of various forms of two or more modalities. The source or form of each type of information can be called a modality. A multi-modality fusion technology in deep learning is a process of processing different forms of data when a model completes analysis and identification tasks. Fusion of multi-modality data can provide more information for the decision making of the model, such that the accuracy of overall results of decision making is improved; and the purpose is to establish a model that can process and associate with information from multiple modalities. The reason for the fusion of the modalities is that different modalities behave differently and see things differently, such that there is some crossover, that is, there is information redundancy. Complementarity is the phenomenon of being better than a single feature, and even there can be a variety of different information interactions between modalities, such that if multi-modality information can be rationally processed, rich feature information can be obtained.

There can be two solutions in the related art. One solution is a method that does not perform multi-mode fusion, that is, after an input of an input source is received, an operation is executed immediately; and as a method for multi-mode fusion is not used, a misoperation phenomenon can be caused when input information of the input source is received. The other solution is implemented through simple determination and analysis, resulting in worse interactive experience.

### Summary

Embodiments of the present disclosure provide an execution instruction determination method and apparatus, and a device and a storage medium, so as to improve interactive experience.

Based on a first aspect, an embodiment of the present disclosure provides an execution instruction determination method. The method includes the following operations.

Input information is acquired. The input information includes at least one first execution instruction and at least one piece of modal information.

At least one second execution instruction is determined based on the at least one piece of modal information.

A target execution instruction is determined based on the at least one first execution instruction and the at least one second execution instruction.

Based on a second aspect, an embodiment of the present disclosure provides an execution instruction determination apparatus. The apparatus includes an information acquisition module, a second execution instruction determination module, and a target execution instruction determination module.

The information acquisition module is configured to acquire input information. The input information includes at least one first execution instruction and at least one piece of modal information.

The second execution instruction determination module is configured to determine at least one second execution instruction based on the at least one piece of modal information.

The target execution instruction determination module is configured to determine a target execution instruction based on the at least one first execution instruction and the at least one second execution instruction.

Based on a third aspect, an embodiment of the present disclosure provides an electronic device. The electronic device includesa processor and a memory.

The memory is configured to store a program.

When the program is executed by the processor, the processor is enabled to implement the execution instruction determination method described in any one of the embodiments of the present disclosure.

Based on a fourth aspect, an embodiment of the present disclosure further provides a computer-readable storage medium. The storage medium stores a computer program. The execution instruction determination method described in any one of the embodiments of the present disclosure is implemented when the computer program is executed by a processor.

### Brief Description of the Drawings

The drawings used in the embodiments will be briefly introduced below. It is to be understood that the following drawings only illustrate some embodiments of the present disclosure. For those of ordinary skill in the art, other related drawings can also be obtained in accordance with these drawings without creative efforts.
Fig. 1 is a flowchart of an execution instruction determination method based on an embodiment of the present disclosure.
Fig. 1a is a flowchart of a training sample acquisition method based on an embodiment of the present disclosure.
Fig. 2 is a schematic structural diagram of an execution instruction determination apparatus based on an embodiment of the present disclosure.
Fig. 3 is a schematic structural diagram of an electronic device based on an embodiment of the present disclosure.
Fig. 4 is a schematic structural diagram of a computer-readable storage medium including a computer program based on an embodiment of the present disclosure.

### Detailed Description of the Embodiments

The present disclosure is described in detail below with reference to the accompanying drawings and embodiments. It is to be understood that, the embodiments described here are merely used for explaining the present disclosure. In addition, it is further to be noted that, for ease of description, only the parts related to the present disclosure are shown in the drawings, but not all of the structure. In addition, in the case of no conflict, the embodiments of the present disclosure and the features in the embodiments can be combined with one another.

It should be mentioned that some exemplary embodiments are described as processes or methods described as the flowcharts. Although the flowcharts describe various operations (or steps) as a sequential process, but many of the operations can be pearranged in parallel, concurrently, or simultaneously. In addition, the sequence of the operations can be rearranged. When the operations are completed, the processes can be terminated, but can also have additional steps that are not included in the drawings. The processes can correspond to methods, functions, procedures, subroutines, subprograms, and the like. In addition, in the case of no conflict, the embodiments of the present disclosure and the features in the embodiments can be combined with one another.

The term "include" and its variants used in the present disclosure are open to include, that is, "include but not limited to". The term "based on" is "based at least in part on". The term "an embodiment" means "at least one embodiment".

It is to be noted that similar numbers and letters indicate similar items in the following drawings, so once an item is defined in one drawing, no definitions and explanations are required for same in the subsequent drawings. In addition, in the descriptions of the present disclosure, the terms "first" and "second" are for distinguishing purposes only, and should not be construed as indicating or implying relative importance.

### Embodiment I

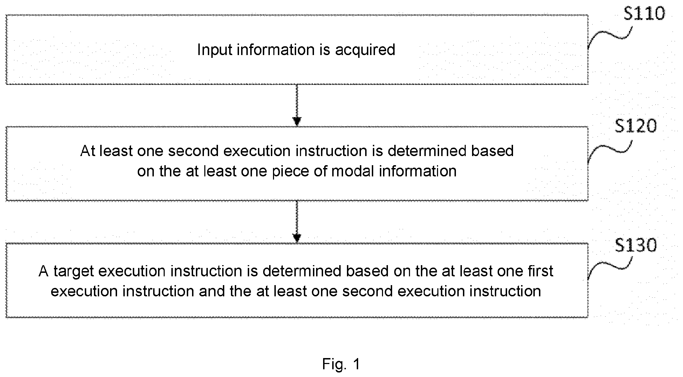

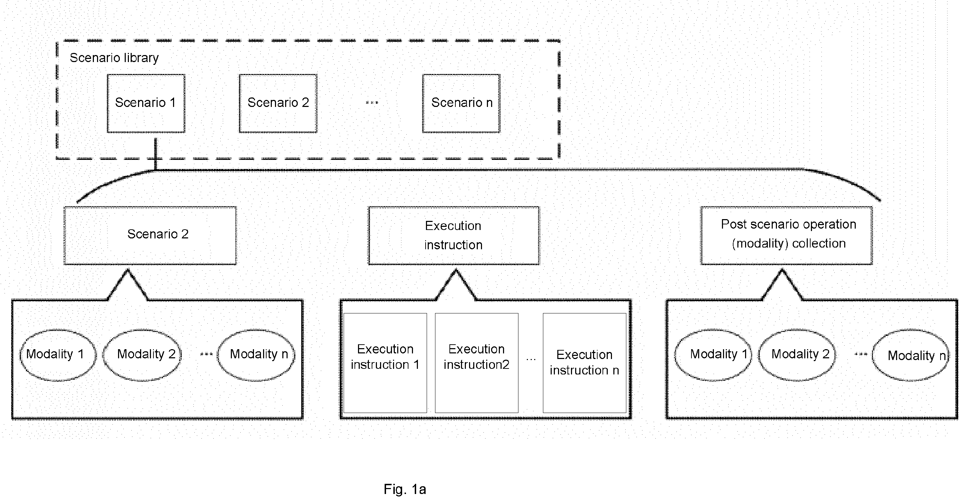

Fig. 1 is a flowchart of an execution instruction determination method based on an embodiment of the present disclosure. This embodiment is applicable to a situation of determining an execution instruction. The method can be executed by an execution instruction determination apparatus in an embodiment of the present disclosure. The apparatus can be implemented by means of software and/or hardware. As shown in Fig. 1, the method includes the following steps.

At S110, input information is acquired.

In this embodiment, the acquired input information can be modal information, and can also be instruction information.

In an embodiment, the input information is acquired by a manager. The manager can be a controller, which is carried by an Electronic Control Unit (ECU) on an automobile, or can be an infotainment host, a controller such as a vehicle body, a chassis and an engine, and an autonomous driving related controller.

In this embodiment, the input information can be information that is inputted by the screen of a controller such as an infotainment system and an air-conditioning system, information inputted through speeches, information inputted by a camera, information that is inputted by hard buttons, pushbuttons, or smart surface buttons on a steering wheel, an air conditioner, windows, etc., information inputted by an external connection device, and information inputted by a built-in application.

In this embodiment, the external connection device can include:
a Universal Serial Bus (USB), a wireless communication technology (WIFI), a mobile phone of which Bluetooth is connected to the infotainment system, and a tablet computer etc.;
a periphery device connected to a vehicle via vehicle network connection (for example, a Controller Area Network (CAN) and Ethernet);
other types of normal controllers and sensors connected via hardwired Input/Output (I/O); and
a cloud server connected to the vehicle via vehicle Ethernet.

In this embodiment, the information inputted by the built-in application can include:
navigation and positioning information provided by a vehicle controller;
road information and other navigation information, which are transmitted from the cloud to a local area;
weather information transmitted from the cloud to the local area; and
smart city information transmitted from the cloud to the local area.

Optionally, the input information includes at least one first execution instruction and at least one piece of modal information.

In this embodiment, the first execution instruction can be an instruction, which is generated by pressing a button of a vehicle window, can be an instruction, which is generated by pressing a button of an air conditioner, can be an instruction, which is generated by clicking a preset region on a touch-control screen, or can be an instruction, which is generated by clicking a switch of a vehicle terminal.

In this embodiment, the modal information can be obtained through collection by a sensor, or obtained through input by a user.

In an embodiment, the modal information can be the following.

Five human senses: touch, hearing, sight, smell and taste.

Human identity information: face, fingerprint, account login, etc.

Human emotions: happiness, anger, sadness, grievance, crying, excitement, etc.

Information medium: speech, video, text, graphics and pictures.

Sensor: for example, radar, infrared, navigation and positioning information, temperature and humidity, air quality, odor sensor, lighting, etc.

Public information: time, time zone, weather, temperature, etc.

Personal preference: like air conditioning of 25 °C , like pop style music, dislike noisy environment, dislike traffic jams, etc.

Historical interaction information: operations of passengers within a time period, and other interaction information.

At S120, at least one second execution instruction is determined based on the at least one piece of modal information.

In this embodiment, the second execution instruction can be an instruction for the button of the vehicle window, for example, can be to open all vehicle windows. The second execution instruction can also be an instruction for the air conditioner, for example, can be to adjust the temperature of the air conditioner to 27 degrees. The second execution instruction can also be an instruction for the vehicle terminal, for example, can be to adjust the voice to 35 decibels.

In an embodiment, the method of determining the at least one second execution instruction based on the at least one piece of modal information can include: pre-establishing a table, where the table stores a correspondence relationship between the modal information and the second execution instruction, and looking up the table based on the at least one piece of modal information, so as to obtain the at least one second execution instruction corresponding to the at least one piece of modal information. The method of determining the at least one second execution instruction based on the at least one piece of modal information can further include: inputting the at least one piece of modal information into an Al model, so as to obtain the at least one second execution instruction. The AI model is obtained by iteratively training a neural network model with a target sample set; the target sample set includes a scenario sample, and an execution instruction sample corresponding to the scenario sample; and the scenario sample includes at least one modal information sample.

In this embodiment, the neural network model is described based on a mathematical model of neurons, and is a complex network system, which is arranged by widely mutually connecting a large number of simple processing units.

In this embodiment, the neural network model can be a convolutional neural network model, or can be a deconvolutional neural network, or can be a recurrent neural network.

Optionally, the step of determining the at least one second execution instruction based on the at least one piece of modal information can include the following operation.

The at least one piece of modal information is inputted into the AI model, so as to obtain the at least one second execution instruction. The AI model is obtained by iteratively training the neural network model with the target sample set; the target sample set includes the scenario sample, and the execution instruction sample corresponding to the scenario sample; and the scenario sample includes the at least one modal information sample.

It is to be noted that, the AI model is obtained by iteratively training the neural network model with the target sample set; and the target sample set is continuously updated.

Optionally, before inputting the at least one piece of modal information into the AI model, so as to obtain the at least one second execution instruction, the method further includes: iteratively training the neural network model with the target sample set. The operation of iteratively training the neural network model with the target sample set can include the following operations.

The neural network model is established.

The at least one modal information sample is inputted into the neural network model, so as to obtain a prediction execution instruction.

A first scenario sample corresponding to the at least one modal information sample is acquired.

A first execution instruction sample corresponding to the first scenario sample is acquired.

Parameters of the neural network model are trained based on the prediction execution instruction and an objective function, which is arranged by the first execution instruction sample.

The operation of inputting the at least one modal information sample into the neural network model, so as to obtain the prediction execution instruction is returned for execution, until the AI model is obtained.

In an embodiment, the manner of inputting the at least one modal information sample into the neural network model, so as to obtain the prediction execution instruction can include: inputting the at least one modal information sample into the neural network model. An output of the neural network model is the prediction execution instruction.

In an embodiment, the manner of acquiring the first scenario sample corresponding to the at least one modal information sample includes: pre-establishing a scenario library, and querying the scenario library based on the at least one modal information sample, so as to obtain the first scenario sample corresponding to the at least one modal information sample.

In an embodiment, the manner of acquiring the first execution instruction sample corresponding to the first scenario sample includes: querying the scenario library based on the first scenario sample, so as to obtain the first execution instruction sample corresponding to the first scenario sample.

In this embodiment, the objective function can be a loss function of the neural network model.

At S130, a target execution instruction is determined based on the at least one first execution instruction and the at least one second execution instruction.

Exemplarily, Fig. 1a is a flowchart of a training sample acquisition method based on an embodiment of the present disclosure. The scenario library includes multiple scenario samples; each scenario sample includes multiple modal information samples; and each scenario sample corresponds to multiple execution instruction samples. After the target execution instruction is executed, and after the first operation is acquired within preset time, a database is updated based on the first operation.

In this embodiment, by means of acquiring the input information, where the input information includes the at least one first execution instruction and the at least one piece of modal information, determining the at least one second execution instruction based on the at least one piece of modal information, and determining the target execution instruction based on the at least one first execution instruction and the at least one second execution instruction, incorrect determination of an execution instruction due to misoperation after input information is received is effectively avoided. Compared with a simple determination and analysis method in the related art, in this embodiment, instructions, which are respectively generated by information inputted by a user and the modal information, need to be combined for comprehensive determination, such that better interactive experience is improved.

Optionally, after the target execution instruction is determined based on the at least one first execution instruction and the at least one second execution instruction, the following step can be executed.

The target execution instruction is executed.

In an embodiment, after the target execution instruction is determined, corresponding instructions are executed by an actuator. The actuator can be:
a display screen of the infotainment system: a dashboard screen, a central control screen, a front-seat passenger screen, a back-seat passenger screen, etc.;
a display screen carrying an air conditioner, Head Up Display (HUD), panoramic rearview camera, transparent A-pillar, streaming rearview mirror, and driving recorder;
speech feedback information;
vehicle prompt information or a prompt tone etc.;
status lamps of the hard buttons, pushbuttons, or smart surface buttons on the steering wheel, air conditioner, and windows; and
controllers for the windows and vehicle doors.

Optionally, after the target execution instruction is executed, the following steps can further be executed.

On the basis of a first operation being triggered within preset time, and a determination result that the first operation meets a preset condition, an execution instruction to be added is determined based on the first operation.

The target sample set is updated based on the execution instruction to be added.In this embodiment, the manner of determining whether the first operation meets the preset condition can include: pre-establishing an operation list by a user; determining whether there is the first operation in the operation list; in response to the first operation in the operation list, determined to the first operation meets the preset condition; and in response to no first operation in the operation list, determined to the first operation does not meet the preset condition. The manner of determining whether the first operation meets the preset condition can include: pre-establishing a determination model; inputting the first operation into the determination model; in response to an output result is positive, determined to the first operation meets the preset condition; and in response to the output result is negative, determined to the first operation does not meet the preset condition.

In this embodiment, the target sample set is a sample set, which is obtained by collecting actual operations of the user under different scenarios. The AI model is obtained by iteratively training the neural network model with the target sample set. After the target execution instruction is executed, the target sample set can also be updated based on some operations of the user within certain time, so as to optimize the target sample set.

In an embodiment, the modal information is inputted into the AI model, so as to obtain the second execution instruction; and then the target execution instruction is determined based on the first execution instruction and the second execution instruction. If the first operation is triggered within a period of time after the target execution instruction is executed, information acquisition is perarranged on the operation; and if the operation is in a list preset by the user, the execution instruction to be added is determined based on the operation, and then the target sample set is updated based on the execution instruction to be added.

In this embodiment, the execution instruction to be added can directly be added to an instruction corresponding to a modality, or the instruction corresponding to the modality can be replaced with the execution instruction to be added.

Exemplarily, if there is an instruction sample corresponding to a modality 1, an instruction corresponding to the original modality 1 is recorded as an instruction A, and the execution instruction to be added is recorded as an instruction B; and in this case, the execution instruction B to be added can directly be added to the instruction corresponding to the modality 1, or the instruction A can be replaced with the execution instruction B to be added. If there is no instruction sample corresponding to the modality 1, the execution instruction B to be added not only needs to be added to the modality 1, but also needs to be added to the instruction corresponding to the modality 1.

### Embodiment II

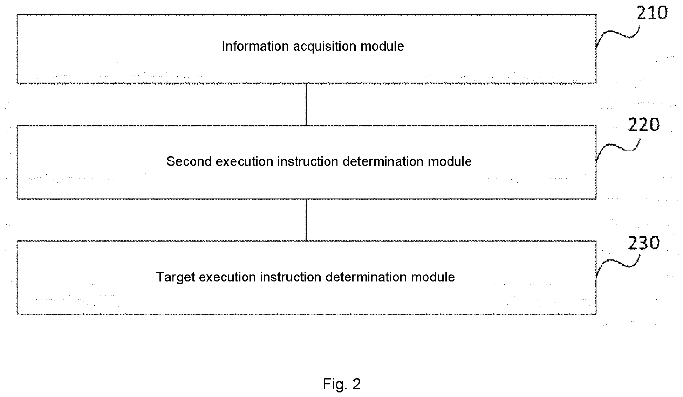

Fig. 2 is a schematic structural diagram of an execution instruction determination apparatus based on an embodiment of the present disclosure. This embodiment is applicable to a situation of determining an execution instruction. The apparatus can be implemented by means of software and/or hardware. The apparatus can be integrated in a device, which provides a computer function. As shown in Fig. 2, the execution instruction determination apparatus can include an information acquisition module 210, a second execution instruction determination module 220, and a target execution instruction determination module 230.

The information acquisition module 210 is configured to acquire input information. The input information includes at least one first execution instruction and at least one piece of modal information.

The second execution instruction determination module 220 is configured to determine at least one second execution instruction based on the at least one piece of modal information.

The target execution instruction determination module 230 is configured to determine a target execution instruction based on the at least one first execution instruction and the at least one second execution instruction.

In this embodiment, by means of acquiring the at least one first execution instruction and the at least one piece of modal information, determining multiple second execution instructions based on multiple pieces of acquired modal information, and determining the target execution instruction on the basis of the first execution instruction and the second execution instruction, a more friendly interaction manner is achieved, and better interactive experience is obtained.

Optionally, the second execution instruction determination module 220 includes a second execution instruction acquisition unit.

The second execution instruction acquisition unit is configured to input the at least one piece of modal information into an AI model, so as to obtain the at least one second execution instruction. The AI model is obtained by iteratively training a neural network model with a target sample set; the target sample set includes a scenario sample, and an execution instruction sample corresponding to the scenario sample; and the scenario sample includes at least one modal information sample.

Optionally, the execution instruction determination apparatus further includes an AI model acquisition module. The AI model acquisition module is configured to perform the following operations.

The neural network model is established.

The at least one modal information sample is inputted into the neural network model, so as to obtain a prediction execution instruction.

A first scenario sample corresponding to the at least one modal information sample is acquired.

A first execution instruction sample corresponding to the first scenario sample is acquired.

Parameters of the neural network model are trained based on the prediction execution instruction and an objective function, which is arranged by the first execution instruction sample.

The operation of inputting the at least one modal information sample into the neural network model, so as to obtain the prediction execution instruction is returned for execution, until the AI model is obtained.

Optionally, the execution instruction determination apparatus further includes an execution module.

The execution module is configured to determine the target execution instruction based on the at least one first execution instruction and the at least one second execution instruction, and then execute the target execution instruction.

Optionally, the execution instruction determination apparatus further includes an instruction determination module and an updating module.

The instruction determination module is configured to execute the target execution instruction, and then, on the basis of a first operation being triggered within preset time, and a determination result that the first operation meets a preset condition, determine, based on the first operation, an execution instruction to be added.

The updating module is configured to update the target sample set based on the execution instruction to be added.

In this embodiment, by means of acquiring the input information, where the input information includes the at least one first execution instruction and the at least one piece of modal information, determining the at least one second execution instruction based on the at least one piece of modal information, and determining the target execution instruction based on the at least one first execution instruction and the at least one second execution instruction, incorrect determination of an execution instruction due to misoperation after input information is received is effectively avoided. Compared with a simple determination and analysis method in the related art, in this embodiment, instructions, which are respectively generated by information inputted by a user and the modal information, need to be combined for comprehensive determination, such that better interactive experience is improved.

### Embodiment III

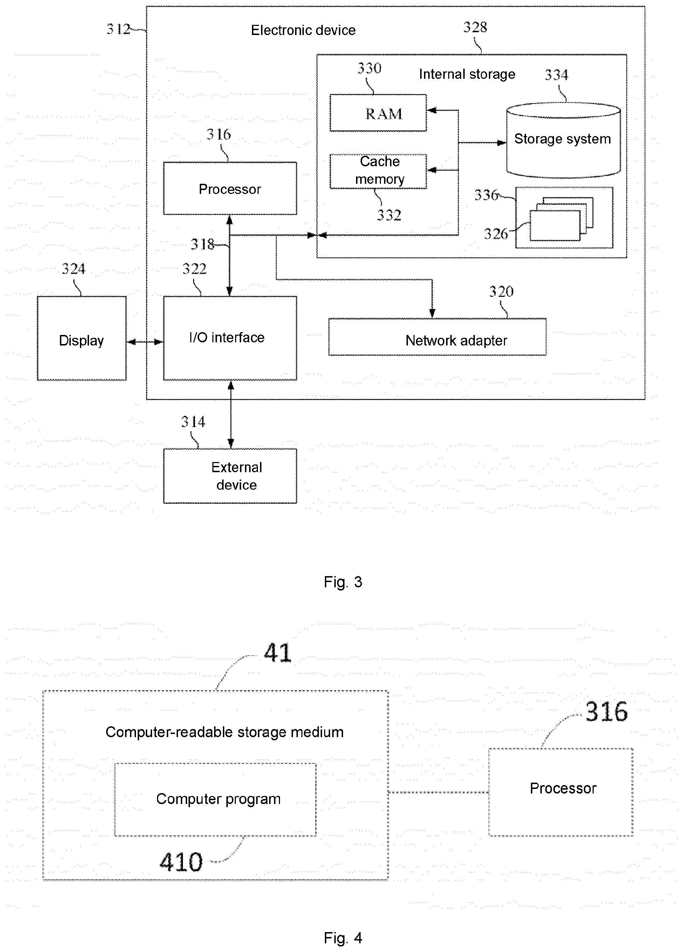

Fig. 3 is a schematic structural diagram of an electronic device based on an embodiment of the present disclosure. Fig. 3 shows a block diagram of an electronic device 312 applied to implement an implementation of the present disclosure. The electronic device 312 shown in Fig. 3 is merely an example. The device 312 is typically a computing device for trajectory fitting functions.

As shown in Fig. 3, the electronic device 312 is expressed in the form of a general computing device. Components of the electronic device 312 can include a processor 316, a storage apparatus 328, and a bus 318, which is connected to different system components (including the storage apparatus 328 and the processor 316).

The bus 318 indicates one or more of several types of bus structures, and includes a memory bus or a memory controller, a peripheral bus, an accelerated graphics port, a processor, or a local bus using any of multiple bus structures. For example, these system structures include an Industry Standard Architecture (ISA) bus, a Micro Channel Architecture (MCA) bus, an enhanced ISA bus, a Video Electronics Standards Association (VESA) local bus, and a Peripheral Component

Interconnect (PCI) bus.

The electronic device 312 typically includes various computer system readable media. These media can be any available media that are able to be accessed by the electronic device 312, including volatile media and non-volatile media, and removable media and non-removable media.

The storage apparatus 328 can include a computer system readable medium in the form of a volatile memory, such as a Random Access Memory (RAM) 330 and/or a cache memory 332. The electronic device 312 can include other removable/non-removable and volatile/non-volatile computer system storage media. Only for example, a storage system 334 can be configured to read non-removable and non-volatile magnetic media (which are generally called "hard disk drives"), and can provide a disk drive for reading a removable non-volatile magnetic disk (such as a "floppy disk"), and an optical disk drive, which is configured to read a removable non-volatile optical disk (such as a Compact Disc-Read Only Memory (CD-ROM)) and a Digital Video Disc-Read Only Memory (DVD-ROM). In these cases, each drive can be connected to the bus 318 via one or more data medium interfaces. The storage apparatus 328 can include at least one program product. The program product is provided with a set of (for example, at least one) program modules; and these program modules are configured to execute functions of the embodiments of the present disclosure.

A program 336 having a set of (at least one) program modules 326 can be stored in the storage apparatus 328, for example. Such program modules 326 include an operating system, one or more application programs, other program modules, and program data. Each of these examples, or a combination thereof, can include an implementation of a network environment. The program modules 326 generally execute functions and/or methods described in the embodiments of the present disclosure.

The electronic device 312 can also communicate with one or more external devices 314 (such as a keyboard, a pointing device, a camera, and a display 324), and can further communicate with one or more devices, which enable a user to interact with the electronic device 312, and/or communicate with any device (such as a network card and a modem), which enables the electronic device 312 to communicate with one or more other computing devices. Such communication canbeperarranged by means of an Input/Output (I/O) interface 322. In addition, the electronic device 312 can further communicate with one or more networks (such as a Local Area Network (LAN), a Wide Area Network (WAN) and/or a public network, for example, the Internet) by means of a network adapter 320. As shown in the figure, the network adapter 320 communicates with other modules of the electronic device 312 by means of the bus 318. It is to be understood that, other hardware and/or software modules can be used in combination with the electronic device 312, including: microcode, device drives, redundant processing units, external disk drive arrays, Redundant Arrays of Independent Disks (RAID) systems, tape drives, and data backup storage systems, etc.

The processor 316 executes various function applications and data processing by running the program stored in the storage apparatus 328, for example, implementing the execution instruction determination method provided in the embodiments of the present disclosure. The method includes the following operations.

Input information is acquired. The input information includes at least one first execution instruction and at least one piece of modal information.

At least one second execution instruction is determined based on the at least one piece of modal information.

A target execution instruction is determined based on the at least one first execution instruction and the at least one second execution instruction.

### Embodiment IV

Fig. 4 is a schematic structural diagram of a computer-readable storage medium including a computer program based on an embodiment of the present disclosure. Provided in an embodiment of the present disclosure is a computer-readable storage medium 41, which has a computer program 410 stored thereon. The execution instruction determination method provided in all the embodiments of the present disclosure is implemented when the program is executed by one or more processors. The method includes the following operations.

Input information is acquired. The input information includes at least one first execution instruction and at least one piece of modal information.

At least one second execution instruction is determined based on the at least one piece of modal information.

A target execution instruction is determined based on the at least one first execution instruction and the at least one second execution instruction.

Any combination of one or more computer-readable media can be used. The computer-readable medium can be a computer-readable signal medium or a computer-readable storage medium or any combination thereof. The computer-readable storage mediumcan be, for example, an electrical, magnetic, optical, electromagnetic, infrared, or semiconductor system, apparatus or device, or a combination of any of the above. The computer-readable storage medium can include an electrical connection member including one or more wires, a portable computer disk, a hard disk, an RAM, an ROM, an Erasable Programmable Read-Only Memory (EPROM), a flash memory, optical fiber, a portable Compact Disc Read-Only Memory (CD-ROM), an optical storage device, a magnetic storage device, or any appropriate combination thereof. In the present disclosure, the computer-readable storage medium can be any tangible medium that includes or stores a program. The program can be used by or in combination with an instruction execution system, an apparatus, or a device.

The computer-readable signal medium can include a data signal that is propagated in a base band or propagated as a part of a carrier wave, which carries a computer-readable program code therein. The propagated data signal can adopt multiple forms including an electromagnetic signal, an optical signal, or any suitable combination of the above. The computer-readable signal medium can also be any computer-readable medium other than the computer-readable storage medium. The computer-readable medium can send, propagate or transmit the program that is used by or in combination with the instruction execution system, the apparatus, or the device.

The program code in the computer-readable medium can be transmitted with any proper medium, including radio, a wire, an optical cable, Radio Frequency (RF), etc., or any proper combination thereof.

In some implementations, a client or a server can communicate by using any currently known or future developed network protocol such as Hyper Text Transfer Protocol (HTTP) and can be interconnected with digital data communications (for example, communication networks) in any form or medium. Examples of a communication network include an LAN, a WAN, an inter-network (for example, the Internet), and an end-to-end network (for example, an ad hoc end-to-end network), as well as any currently known or future developed networks.

The computer-readable medium can be included in the electronic device, or can also be present separately and not fitted into the electronic device.

The computer program code configured to execute operations in the present disclosurecanbe compiled by using one or more programming languages or a combination thereof. The programming languages include a programming language facing an object, such as Java, Smalltalk, and C++, and further include a conventional procedural programming language, such as "C" language, or similar programming languages. The program code can be completely executed in a computer of a user or partially executed in the computer of the user, executed as an independent software package, executed partially in the computer of the user and partially in a remote computer, or executed completely in the remote server or a server. Under the condition that the remote computer is involved, the remote computer can be concatenated to the computer of the user through any type of network including an LAN or a WAN, or can be concatenated to an external computer (for example, concatenated by an Internet service provider through the Internet).

The flowcharts and block diagrams in the drawings illustrate probably implemented system architectures, functions, and operations of the system, method, and computer program product based on various embodiments of the present disclosure. On this aspect, each block in the flowcharts or block diagrams can represent a module, a program segment, or a portion of a code, which includes one or more executable instructions for implementing the specified logic functions. It is also to be noted that, in certain alternative implementations, the functions marked in the blocks can also be realized in a sequence different from those marked in the drawings. For example, two blocks shown in succession can, in fact, be executed substantially in parallel, and sometimes in a reverse sequence, depending upon the functionality involved. It is further to be noted that, each block in the block diagrams and/or the flowcharts and a combination of the blocks in the block diagrams and/or the flowcharts can be implemented by a dedicated hardware-based system configured to execute a specified function or operation, or can be implemented by a combination of special hardware and a computer instruction.

The units described in the embodiments of the present disclosure can be implemented by means of software or hardware.

The functions described above herein can be executed, at least in part, by one or more hardware logic components. For example, exemplary types of the hardware logic components that can be used include: a Field Programmable Gate Array (FPGA), an Application Specific Integrated Circuit (ASIC), Application Specific Standard Parts (ASSP), a System on Chip (SOC), and a Complex Programmable Logic Device (CPLD), etc.

In the context of the disclosure, a machine-readable medium can be a tangible medium, which can include or store a program for being used by an instruction execution system, device, or apparatus or in combination with the instruction execution system, apparatus, or device. The machine-readable medium can be a machine-readable signal medium or a machine-readable storage medium. The machine-readable medium can include an electronic, magnetic, optical, electromagnetic, infrared, or semiconductor system, device, or apparatus, or any foregoing suitable combinations. The machine-readable storage medium can include electrical connections based on one or more wires, a portable computer disk, a hard disk, an RAM, an ROM, an EPROM or a flash memory, an optical fiber, a portable CD-ROM, an optical storage device, a magnetic storage device, or any above suitable combinations.

## Claims

1. An execution instruction determination method, comprising:
acquiring input information, wherein the input information comprises at least one first execution instruction and at least one piece of modal information;
determining at least one second execution instruction based on the at least one piece of modal information; and
determining a target execution instruction based on the at least one first execution instruction and the at least one second execution instruction.

2. The method as claimed in claim 1, wherein determining at least one second execution instruction based on the at least one piece of modal information comprises:
inputting the at least one piece of modal information into an Artificial Intelligence (Al) model, to obtain the at least one second execution instruction, wherein the AI model is obtained by iteratively training a neural network model with a target sample set; the target sample set comprises a scenario sample, and an execution instruction sample corresponding to the scenario sample; and the scenario sample comprises at least one modal information sample.

3. The method as claimed in claim 2, wherein before inputting the at least one piece of modal information into the AI model, to obtain the at least one second execution instruction, the method further comprises:
establishing a neural network model;
inputting the at least one modal information sample into the neural network model, to obtain a prediction execution instruction;
acquiring a first scenario sample corresponding to the at least one modal information sample;
acquiring a first execution instruction sample corresponding to the first scenario sample;
training parameters of the neural network model based on an objective function arranged by the prediction execution instruction and the first execution instruction sample; and
returning to executing the operation of inputting the at least one modal information sample into the neural network model, to obtain the prediction execution instruction, until the AI model is obtained.

4. The method as claimed in claim 1, wherein after determining the target execution instruction based on the at least one first execution instruction and the at least one second execution instruction, the method further comprises:
executing the target execution instruction.

5. The method as claimed in claim 4, wherein after executing the target execution instruction, the method further comprises:
based on a determination result that a first operation is triggered within a preset time period, and the first operation meets a preset condition, determining, according to the first operation, an execution instruction to be added; and
updating the target sample set based on the execution instruction to be added.
. An electronic device, comprising:
a processor; and
a memory, configured to store a program, wherein
when the program is executed by the processor, the processor is enabled to implement the method as claimed in any one of claims 1 to 5.

6. An execution instruction determination apparatus, comprising:
an information acquisition module, configured to acquire input information, wherein the input information comprises at least one first execution instruction and at least one piece of modal information;
a second execution instruction determination module, configured to determine at least one second execution instruction based on the at least one piece of modal information; and
a target execution instruction determination module, configured to determine a target execution instruction based on the at least one first execution instruction and the at least one second execution instruction.

7. The apparatus as claimed in claim 6, wherein the second execution instruction determination module comprises:
a second execution instruction acquisition unit, configured to input the at least one piece of modal information into an Artificial Intelligence (Al) model, to obtain the at least one second execution instruction, wherein the AI model is obtained by iteratively training a neural network model with a target sample set; the target sample set comprises a scenario sample, and an execution instruction sample corresponding to the scenario sample; and the scenario sample comprises at least one modal information sample.

8. The apparatus as claimed in claim 7, further comprising an AI model acquisition module, wherein the AI model acquisition module is configured to:
establish the neural network model;
input the at least one modal information sample into the neural network model, to obtain a prediction execution instruction;
acquire a first scenario sample corresponding to the at least one modal information sample;
acquire a first execution instruction sample corresponding to the first scenario sample;
train parameters of the neural network model based on the prediction execution instruction and an objective function, which is arranged by the first execution instruction sample; and
return to executing the operation of inputting the at least one modal information sample into the neural network model, to obtain the prediction execution instruction, until the AI model is obtained.

9. An electronic device, comprising:
a processor; and
a memory, configured to store a program, wherein
when the program is executed by the processor, the processor is enabled to implement the method as claimed in any one of claims 1 to 5.

10. A computer-readable storage medium, having a computer program stored thereon, wherein the method as claimed in any one of claims 1 to 5 is implemented when the computer program is executed by a processor.
